(19) Europäisches Patentamt
European Patent Office
Office européen des brevets

(11) **EP 4 723 217 A2**

(12) # EUROPEAN PATENT APPLICATION

(43) Date of publication:
**08.04.2026 Bulletin 2026/15**

(21) Application number: **26150743.8**

(22) Date of filing: **08.01.2026**

(51) International Patent Classification (IPC):
***H01M 4/36*** *(2006.01)* ***H01M 4/38*** *(2006.01)*
***H01M 4/587*** *(2010.01)* ***H01M 4/62*** *(2006.01)*
***H01M 10/0567*** *(2010.01)* ***H01M 10/0568*** *(2010.01)*
***H01M 10/0569*** *(2010.01)*

(52) Cooperative Patent Classification (CPC):
**H01M 10/0569; H01M 4/362; H01M 4/386; H01M 4/587; H01M 4/625; H01M 10/0567; H01M 10/0568;** H01M 2300/0042; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.01.2025 CN 202510034508**

(71) Applicant: **Ningde Amperex Technology Limited**
**Ningde, Fujian 352100 (CN)**

(72) Inventor: **ZHANG, Huili**
**Ningde City, Fujian Province 352100 (CN)**

(74) Representative: **Kraus & Lederer PartGmbB**
**Thomas-Wimmer-Ring 15**
**80539 München (DE)**

(54) **SECONDARY BATTERY AND ELECTRONIC DEVICE**

(57) A secondary battery, including a negative electrode plate and an electrolyte, where the negative electrode plate includes a negative electrode active material layer. The negative electrode active material layer includes graphite and a silicon-carbon material, and an average sphericity of the silicon-carbon material is 0.81 to 0.95. The electrolyte includes ethylene carbonate, propylene carbonate, ethyl propionate and propyl propionate, where based on a mass of the electrolyte, a mass percentage of the ethylene carbonate is a%, a mass percentage of the propylene carbonate is b%, a mass percentage of the ethyl propionate is c%, a mass percentage of the propyl propionate is d%, and (a+b)/(c+d) is in a range of 0.23 to 1.51.



Processed by Luminess, 75001 PARIS (FR)

## Description

### TECHNICAL FIELD

This application relates to the technical field of batteries, and in particular, to a secondary battery and an electronic device including the secondary battery.

### BACKGROUND

Due to advantages such as being environmentally friendly, high energy density, and long cycle life, secondary batteries, such as lithium-ion batteries, have been widely used in mobile phones, computers, wearable devices, consumer-grade drones, power tools, electric motorcycles, electric vehicles or large-scale energy storage devices. With the continuous expansion of the market, the performance requirements for secondary batteries have also been continuously improved, such as the performance of the battery under high and low temperature conditions. At present, carbonate compounds are often selected as the solvent system for the electrolyte of secondary batteries. However, such secondary batteries have poor high-voltage stability and easily cause instability of the graphite material structure of the negative electrode, thereby reducing electrochemical performance thereof. Therefore, it is necessary to further improve the performance of secondary batteries.

### SUMMARY

In view of this, this application provides a secondary battery and an electronic device, which is capable of improving the charge retention capability of the secondary battery, thereby improving the low-temperature discharge performance of the secondary battery and increasing the pass rate of the short-circuit test of the secondary battery, thereby improving the safety performance of the secondary battery.

According to a first aspect, this application provides a secondary battery, including a negative electrode plate and an electrolyte, where the negative electrode plate includes a negative electrode active material layer. The negative electrode active material layer includes graphite and a silicon-carbon material, and an average sphericity of the silicon-carbon material is 0.81 to 0.95. The electrolyte includes ethylene carbonate, propylene carbonate, ethyl propionate and propyl propionate, where based on a mass of the electrolyte, a mass percentage of the ethylene carbonate is a%, a mass percentage of the propylene carbonate is b%, a mass percentage of the ethyl propionate is c%, a mass percentage of the propyl propionate is d%, and (a+b)/(c+d) is in a range of 0.23 to 1.51. The electrolyte having the above specific components can increase the rate of intercalation/deintercalation of active ions on a surface of the silicon-carbon material with high sphericity, shorten the transmission path of active ions between graphite and the silicon-carbon material, improve its charge retention capability while maintaining the high capacity of the battery, thereby improving the discharge performance of the secondary battery at low temperature. In addition, the increased migration rate of active ions can reduce lithium dendrites generated on the surface of an electrode plate, increasing the pass rate of the short-circuit test of the secondary battery and improving the safety performance of the secondary battery.

Based on the content of the first aspect, in some embodiments, the electrolyte further includes 1,3,6-hexanetricarbonitrile, where based on the mass of the electrolyte, a mass percentage of the 1,3,6-hexanetricarbonitrile is e%, and (a+b)/e is in a range of 4 to 18.5. In some embodiments, (a+b)/e is in the range of 5.1 to 15. This can enhance the transmission of active ions between graphite and the silicon-carbon material, further improving the discharge performance of the secondary battery at low temperature and increasing the pass rate of the short-circuit test of the secondary battery, thereby improving the safety performance of the secondary battery.

Based on the content of the first aspect, in some embodiments, based on the mass of the electrolyte, the mass percentage of the 1,3,6-hexanetricarbonitrile is 0.8% to 4.3%. In some embodiments, the mass percentage of the 1,3,6-hexanetricarbonitrile is 1.3% to 3.5%. This can further improve the discharge performance and safety performance of the secondary battery at low temperature.

Based on the content of the first aspect, in some embodiments, the electrolyte further includes at least one of fluoroethylene carbonate, succinonitrile, ethylene glycol bis(propionitrile) ether, lithium difluorophosphate, and/or lithium tetrafluoroborate. The electrolyte including the above substances can form a highly ion-conductive protective film on a surface of the graphite material and the silicon-carbon material with higher sphericity, further promoting the rapid transmission of active ions on the surface of a negative electrode active material, thereby facilitating the improvement of the discharge performance and safety performance of the secondary battery at low temperature.

Based on the content of the first aspect, in some embodiments, a mass percentage of the fluoroethylene carbonate is 0.5% to 3.9%. The mass percentage of the fluoroethylene carbonate within the above range is conducive to forming a highly ion-conductive protective film with an appropriate content, and is conducive to improving the stability of the surface of the negative electrode plate, thereby further improving the discharge performance and safety performance of the secondary battery at low temperature.

Based on the content of the first aspect, in some embodiments, a mass percentage of the succinonitrile is 0.6% to 3.9%. In some embodiments, the mass percentage of the succinonitrile is 1.3% to 3.2%. The mass percentage of the succinonitrile within the above range is conducive to forming a highly ion-conductive protective film with an appropriate content, thereby further improving the discharge performance and safety performance of the secondary battery at low temperature.

Based on the content of the first aspect, in some embodiments, a mass percentage of the ethylene glycol bis(propionitrile) ether is 0.2% to 2.5%. The mass percentage of the ethylene glycol bis(propionitrile) ether within the above range is conducive to inhibiting the increase of surface defects of the silicon-carbon material with high sphericity, increasing the transmission rate of active ions, and further improving the discharge performance and safety performance of the secondary battery at low temperature.

Based on the content of the first aspect, in some embodiments, a mass percentage of the lithium difluorophosphate is 0.01% to 0.30%. The mass percentage of the lithium difluorophosphate within the above range helps to stabilize the defect structure on the surface of the silicon-carbon material with high sphericity, promote the transmission of active ions, and further improve the discharge performance and safety performance of the secondary battery at low temperature.

Based on the content of the first aspect, in some embodiments, a mass percentage of the lithium tetrafluoroborate is 0.001% to 0.100%. The mass percentage of the lithium tetrafluoroborate within the above range is conducive to further optimizing the surface ion pathway of the silicon-carbon material with high sphericity, promoting the rapid transmission of active ions, and further improving the discharge performance and safety performance of the secondary battery at low temperature.

Based on the content of the first aspect, in some embodiments, the electrolyte further includes lithium difluorophosphate, where based on the mass of the electrolyte, a mass percentage of the lithium difluorophosphate is n%, and n and the average sphericity m of the silicon-carbon material satisfy a relationship: m/n is in a range of 3 to 14.5. In some embodiments, m/n is in the range of 3.9 to 12.7. This allows lithium difluorophosphate to fully stabilize the defect structure on the surface of the silicon-carbon material with high sphericity, facilitate the rapid transmission of active ions on the surface of the silicon-carbon material, reduce the occurrence of side reactions, further improve the charge retention capability of the secondary battery, improve the discharge performance of the secondary battery at low temperature and increase the pass rate of the short-circuit test of the secondary battery, thereby improving the safety performance of the secondary battery.

Based on the content of the first aspect, in some embodiments, the mass percentage of the fluoroethylene carbonate is 1.1% to 3.2%. This is conducive to further improving the discharge performance and safety performance of the secondary battery at low temperature.

Based on the content of the first aspect, in some embodiments, a is in a range of 10 to 38. In some embodiments, a is in the range of 11 to 26. This is conducive to further improving the discharge performance and safety performance of the secondary battery at low temperature.

Based on the content of the first aspect, in some embodiments, b is in a range of 5 to 26. In some embodiments, b is in the range of 7 to 20. This is conducive to further improving the discharge performance and safety performance of the secondary battery at low temperature.

Based on the content of the first aspect, in some embodiments, c is in a range of 12 to 26. In some embodiments, c is in the range of 13 to 21. This is conducive to further improving the discharge performance and safety performance of the secondary battery at low temperature.

Based on the content of the first aspect, in some embodiments, d is in a range of 27 to 53. In some embodiments, d is in the range of 30 to 44. This is conducive to further improving the discharge performance and safety performance of the secondary battery at low temperature.

Based on the content of the first aspect, in some embodiments, e is in a range of 0.8 to 4.3. In some embodiments, this is conducive to further improving the discharge performance and safety performance of the secondary battery at low temperature.

Based on the content of the first aspect, in some embodiments, based on the mass of the electrolyte, the mass percentage of the lithium difluorophosphate is 0.04% to 0.24%, which is conducive to further improving the discharge performance and safety performance of the secondary battery at low temperature.

Based on the content of the first aspect, in some embodiments, based on the mass of the electrolyte, the mass percentage of the ethylene glycol bis(propionitrile) ether is 0.4% to 2.1%, which is conducive to further improving the discharge performance and safety performance of the secondary battery at low temperature.

Based on the content of the first aspect, in some embodiments, based on the mass of the electrolyte, the mass percentage of the lithium tetrafluoroborate is 0.008% to 0.050%, which is conducive to further improving the discharge performance and safety performance of the secondary battery at low temperature.

According to a second aspect, this application provides an electronic device, including the secondary battery according to any one of the first aspect. Using the above secondary battery as a power supply source of the electronic device, the performance of the secondary battery is stable and can stably supply power to the electronic device.

Compared with the prior art, this application has the following beneficial effects:

This application provides a secondary battery, including a positive electrode, a negative electrode, and an electrolyte, where the negative electrode plate includes a negative electrode active material layer. The negative electrode active material layer includes graphite and a silicon-carbon material, and the average sphericity of the silicon-carbon material is 0.81 to 0.95. The electrolyte includes ethylene carbonate, propylene carbonate, ethyl propionate and propyl propionate, where based on a mass of the electrolyte, a mass percentage of the ethylene carbonate is a%, a mass percentage of the propylene carbonate is b%, a mass percentage of the ethyl propionate is c%, a mass percentage of the propyl propionate is d%, and (a+b)/(c+d) is in a range of 0.23 to 1.51. A high average sphericity of the silicon-carbon material combined with the relational expression of the mass percentages of ethylene carbonate, propylene carbonate, ethyl propionate, and propyl propionate in the electrolyte can improve the low-temperature discharge performance and the safety performance during short circuit of the secondary battery.

## DETAILED DESCRIPTION

The following clearly describes in detail the technical solutions in some embodiments of this application. Apparently, the described embodiments are only some rather than all of embodiments of this application. Unless otherwise defined, all technical and scientific terms used herein shall have the same meanings as commonly understood by persons skilled in the art to which this application relates. The terms used in the specification of this application are for description of specific embodiments only without any intention to limit this application. The data range values recorded in this application shall include the endpoint values unless otherwise specified.

This application provides a secondary battery, including a negative electrode plate and an electrolyte, where the negative electrode plate includes a negative electrode active material layer. The negative electrode active material layer includes a negative electrode active material, the negative electrode active material includes graphite and a silicon-carbon material, and an average sphericity of the silicon-carbon material is 0.81 to 0.95. The electrolyte includes ethylene carbonate, propylene carbonate, ethyl propionate and propyl propionate, where based on a mass of the electrolyte, a mass percentage of the ethylene carbonate is a%, a mass percentage of the propylene carbonate is b%, a mass percentage of the ethyl propionate is c%, a mass percentage of the propyl propionate is d%, and (a+b)/(c+d) is in a range of 0.23 to 1.51.

In this application, the negative electrode plate in the secondary battery includes graphite and a silicon-carbon material, a sphericity of the silicon-carbon material is within the above range, and when the contents of ethylene carbonate, propylene carbonate, ethyl propionate, and propyl propionate in the electrolyte satisfy the above range, the electrolyte having the above specific components can increase the rate of intercalation/deintercalation of active ions on a surface of the silicon-carbon material with high sphericity and can shorten the transmission path of active ions between graphite and the silicon-carbon material, thereby enabling the secondary battery to improve its charge retention capability while maintaining the high capacity of the secondary battery, and thus improving the discharge performance of the secondary battery at low temperature. In addition, the increased migration rate of active ions inside the secondary battery can reduce lithium dendrites generated on the surface of an electrode plate, thereby increasing the pass rate of the short-circuit test of the secondary battery to improve the safety performance of the secondary battery.

In some embodiments, the average sphericity of the silicon-carbon material may be 0.81, 0.83, 0.85, 0.87, 0.89, 0.90, 0.91, 0.93, 0.95, or any value within a range defined by any two of the foregoing values. In some embodiments, the ratio of (a+b)/(c+d) may be 0.23, 0.25, 0.3, 0.4, 0.5, 0.6, 0.7, 0.8, 0.9, 1, 1.1, 1.2, 1.3, 1.4, 1.5, 1.51, or any value within a range defined by any two of the foregoing values.

If the ratio of (a+b)/(c+d) is relatively small, such as less than 0.23, the sum of the mass percentages of ethyl propionate and propyl propionate is relatively large, and the above two are prone to side reactions, affecting the interface stability between the electrode plate and the electrolyte in the secondary battery, or the content of ethylene carbonate and propylene carbonate is relatively small, which may affect the overall stability of the secondary battery, thereby affecting the pass rate of the short-circuit test of the secondary battery and affecting the safety performance of the secondary battery. Alternatively, if the ratio of (a+b)/(c+d) is relatively large, such as greater than 1.51, the sum of the mass percentages of ethyl propionate and propyl propionate is relatively small, affecting the transmission rate of active ions between graphite and the silicon-carbon material, thereby affecting the low-temperature discharge performance of the secondary battery. In some embodiments, the electrolyte further includes 1,3,6-hexanetricarbonitrile, where based on the mass of the electrolyte, a mass percentage of the 1,3,6-hexanetricarbonitrile is e%, and (a+b)/e is in a range of 4 to 18.5. When the content of 1,3,6-hexanetricarbonitrile and the sum of the contents of ethylene carbonate and propylene carbonate satisfy the above range, the transmission of active ions between graphite and the silicon-carbon material can be enhanced, further improving the discharge performance of the secondary battery at low temperature and increasing the pass rate of the short-circuit test of the secondary battery, thereby improving the safety performance of the secondary battery. In some embodiments, the ratio of (a+b)/e may be 4, 4.5, 5, 5.1, 5.5, 6, 7, 8, 9, 10, 11, 12, 13, 14, 15, 15.5, 16, 17, 18, 18.5, or any value within a range defined by any two of the foregoing values. Preferably, (a+b)/e is in the range of 5.1 to 15, which can further improve the performance of the secondary battery.

In some embodiments, the electrolyte further includes at least one of fluoroethylene carbonate, succinonitrile, ethylene glycol bis(propionitrile) ether, lithium difluorophosphate, or lithium tetrafluoroborate. The electrolyte including the above substances can form a highly ion-conductive protective film on a surface of the graphite material and the silicon-carbon material with higher sphericity, further promoting the rapid transmission of active ions on the surface of the negative electrode active material, thereby facilitating the improvement of the discharge performance and safety performance of the secondary battery at low temperature.

In some embodiments, based on the mass of the electrolyte, a mass percentage of the fluoroethylene carbonate is 0.5% to 3.9%. The mass percentage of the fluoroethylene carbonate within the above range is conducive to forming a highly ion-conductive protective film with an appropriate content, and is conducive to improving the stability of the surface of the negative electrode plate, thereby further improving the discharge performance and safety performance of the secondary battery at low temperature. In some embodiments, the mass percentage of the fluoroethylene carbonate may be 0.5%, 0.8%, 1%, 1.2%, 1.8%, 2.1%, 2.3%, 2.5%, 2.7%, 3%, 3.2%, 3.3%, 3.5%, 3.9%, or any value within a range defined by any two of the foregoing values. In some embodiments, based on the mass of the electrolyte, the mass percentage of the fluoroethylene carbonate (FEC) is 0.8% to 3.2%. Preferably, the mass percentage of the fluoroethylene carbonate is 1.1% to 3.2%. This is conducive to further improving the discharge performance and safety performance of the secondary battery at low temperature.

In some embodiments, based on the mass of the electrolyte, a mass percentage of the succinonitrile is 0.6% to 3.9%. The mass percentage of the succinonitrile within the above range is conducive to forming a highly ion-conductive protective film with an appropriate content, thereby further improving the discharge performance and safety performance of the secondary battery at low temperature. In some embodiments, the mass percentage of the succinonitrile may be 0.6%, 1%, 1.3%, 1.5%, 1.8%, 2%, 2.3%, 2.5%, 2.7%, 3%, 3.1%, 3.3%, 3.5%, 3.9%, or any value within a range defined by any two of the foregoing values. Preferably, the mass percentage of the succinonitrile is 1.3% to 3.2%.

In some embodiments, based on the mass of the electrolyte, a mass percentage of the ethylene glycol bis(propionitrile) ether is 0.2% to 2.5%. The mass percentage of the ethylene glycol bis(propionitrile) ether within the above range is conducive to inhibiting the increase of surface defects of the silicon-carbon material with high sphericity, increasing the transmission rate of active ions, and further improving the discharge performance and safety performance of the secondary battery at low temperature. In some embodiments, the mass percentage of the ethylene glycol bis(propionitrile) ether may be 0.2%, 0.3%, 0.4%, 0.5%, 0.7%, 1%, 1.5%, 1.7%, 2%, 2.1%, 2.3%, 2.5%, or any value within a range defined by any two of the foregoing values. Preferably, the mass percentage of the ethylene glycol bis(propionitrile) ether is 0.4% to 2.1%.

In some embodiments, based on the mass of the electrolyte, a mass percentage of the lithium difluorophosphate is 0.01% to 0.30%. The mass percentage of the lithium difluorophosphate within the above range helps to stabilize the defect structure on the surface of the silicon-carbon material with high sphericity, promote the transmission of active ions, and further improve the discharge performance and safety performance of the secondary battery at low temperature. In some embodiments, the mass percentage of the lithium difluorophosphate may be 0.01%, 0.03%, 0.04%, 0.05%, 0.08%, 0.10%, 0.15%, 0.18%, 0.20%, 0.24%, 0.25%, 0.28%, 0.30%, or any value within a range defined by any two of the foregoing values. Preferably, the mass percentage of the lithium difluorophosphate is 0.04% to 0.24%.

In some embodiments, based on the mass of the electrolyte, a mass percentage of the lithium tetrafluoroborate is 0.001% to 0.100%. The mass percentage of the lithium tetrafluoroborate within the above range is conducive to further optimizing the surface ion pathway of the silicon-carbon material with high sphericity, promoting the rapid transmission of active ions, and further improving the discharge performance and safety performance of the secondary battery at low temperature. In some embodiments, the mass percentage of the lithium tetrafluoroborate may be 0.001%, 0.003%, 0.005%, 0.008%, 0.010%, 0.020%, 0.030%, 0.040%, 0.050%, 0.060%, 0.070%, 0.080%, 0.090%, 0.100%, or any value within a range defined by any two of the foregoing values. Preferably, the mass percentage of the lithium tetrafluoroborate is 0.008% to 0.050%.

In some embodiments, the electrolyte further includes lithium difluorophosphate, where based on the mass of the electrolyte, a mass percentage of the lithium difluorophosphate is n%, and n and the average sphericity m of the silicon-carbon material satisfy a relationship: m/n is in a range of 3 to 14.5. The content of lithium difluorophosphate and the average sphericity of the silicon-carbon material satisfying the above relationship allows lithium difluorophosphate to fully stabilize the defect structure on the surface of the silicon-carbon material with high sphericity, facilitate the rapid transmission of active ions on the surface of the silicon-carbon material, reduce the occurrence of side reactions, further improve the charge retention capability of the secondary battery, improve the discharge performance of the secondary battery at low temperature and increase the pass rate of the short-circuit test of the secondary battery, thereby improving the safety performance of the secondary battery. In some embodiments, m/n may be 3, 4, 5, 6, 7, 8, 9, 10, 11, 12, 13, 14, 14.5, or any value within a range defined by any two of the foregoing values. Preferably, m/n is in the range of 3.9 to 12.7, further improving the performance of the secondary battery.

In some embodiments, based on the mass of the electrolyte, the mass percentage of the ethylene carbonate is a%, and a is in a range of 10 to 38. In some embodiments, a is in the range of 11 to 26. In some embodiments, a is in the range of 11 to 22. This is conducive to further improving the discharge performance and safety performance of the secondary battery at low temperature. In some embodiments, a may be 10, 12, 15, 17, 19, 20, 22, 25, 28, 30, 32, 34, 36, 37, 38, or any value within a range defined by any two of the foregoing values.

In some embodiments, based on the mass of the electrolyte, the mass percentage of the propylene carbonate is b%, and b is in a range of 5 to 26. In some embodiments, b is in the range of 7 to 20. In some embodiments, b is in the range of 9 to 20. This is conducive to further improving the discharge performance and safety performance of the secondary battery at low temperature. In some embodiments, b may be 5, 8, 10, 12, 15, 17, 20, 24, 26, or any value within a range defined by any two of the foregoing values.

In some embodiments, based on the mass of the electrolyte, the mass percentage of the ethyl propionate is c%, and c is in a range of 12 to 26. In some embodiments, c is in the range of 13 to 21. In some embodiments, c is in the range of 13 to 19. This is conducive to further improving the discharge performance and safety performance of the secondary battery at low temperature. In some embodiments, c may be 12, 15, 17, 19, 20, 21, 22, 25, 26, or any value within a range defined by any two of the foregoing values.

In some embodiments, based on the mass of the electrolyte, the mass percentage of the propyl propionate is d%, and d is in a range of 27 to 49. In some embodiments, d is in the range of 30 to 45. In some embodiments, d is in the range of 31 to 43. This is conducive to further improving the discharge performance and safety performance of the secondary battery at low temperature. In some embodiments, d may be 27, 29, 31, 34, 37, 40, 43, 47, 49, or any value within a range defined by any two of the foregoing values.

In some embodiments, based on the mass of the electrolyte, the mass percentage of the 1,3,6-hexanetricarbonitrile is e%, and e is in a range of 0.8 to 4.3. In some embodiments, e is in the range of 1.3 to 3.5. This is conducive to further improving the discharge performance and safety performance of the secondary battery at low temperature. In some embodiments, e may be 0.8, 1.2, 1.5, 1.8, 2, 2.4, 2.8, 3, 3.4, 3.8, 4, 4.3, or any value within a range defined by any two of the foregoing values.

According to a second aspect, this application provides an electronic device, including the above secondary battery. Using the above secondary battery as a power supply source of the electronic device, the performance of the secondary battery is stable and can stably supply power to the electronic device.

Electrolyte

In addition to the above ethyl propionate and propyl propionate, an organic solvent in the electrolyte further includes some other organic solvents, and the other organic solvents may be, but are not limited to: diethyl carbonate (DEC), ethyl methyl carbonate (EMC) or dimethyl carbonate (DMC). In some embodiments, the other organic solvents include an ether solvent, for example, including at least one of 1,3-dioxolane (DOL) and dimethoxyethane (DME).

In some embodiments of this application, the electrolyte includes a lithium salt as an electrolytic salt. The lithium salt in the electrolyte includes, but is not limited to: inorganic lithium salts, such as $LiClO_4$, $LiAsF_6$, $LiPF_6$, $LiSbF_6$, $LiSO_3F$, $LiN(FSO_2)_2$; fluorine-containing organic lithium salts, such as $LiCF_3SO_3$, $LiN(FSO_2)(CF_3SO_2)$, $LiN(CF_3SO_2)_2$, $LiN(C_2F_5SO_2)_2$, cyclic 1,3-hexafluoropropane disulfonylimide lithium, cyclic 1,2-tetrafluoroethane disulfonylimide lithium, $LiPF_4(CF_3)_2$, $LiN(CF_3SO_2)(C4F_9SO_2)$, $LiC(CF_3SO_2)_3$, $LiPF_4(CF_3SO_2)_2$, $LiPF_4(C_2F_5)_2$, $LiPF_4(C_2F_5SO_2)_2$, $LiBF_2(CF_3)_2$, $LiBF_2(C_2F_5)_2$, $LiBF_2(CF_3SO_2)_2$, $LiBF_2(C_2F_5SO_2)_2$; and lithium salts containing dicarboxylic acid complexes, such as lithium bis(oxalate)borate, lithium difluoro(oxalate)borate, lithium tris(oxalate)phosphate, lithium difluoro bis(oxalate) phosphate, lithium tetrafluoro(oxalate)phosphate. In addition, one of the foregoing lithium salts may be used alone, or two or more thereof may be used. For example, in some embodiments, the lithium salt includes a combination of $LiPF_6$ and $LiBF_4$. In some embodiments, the lithium salt includes $LiPF_6$. In some embodiments, based on a mass of the electrolyte, a mass percentage of the lithium salt in the electrolyte is 9% to 15%.

The preparation method of the electrolyte in some embodiments of this application is not limited and may be prepared according to a conventional electrolyte method. In some embodiments, the electrolyte of this application may be prepared by mixing all constituents.

Negative electrode

In some embodiments, graphite includes at least one of artificial graphite or natural graphite.

Graphite may be obtained by the following method: selecting petroleum coke with relatively low volatile content as a raw material, crushing it into single particles, performing surface modification treatment after heat treatment to convert the particles into graphite, and finally obtain negative electrode active particles. Certainly, the preparation method of the negative electrode active particles is not limited thereto, and other methods well known in the art may also be used for preparation.

In some embodiments, the silicon-carbon material may be obtained by the following preparation method: using a porous carbon material as a framework and preparing the material after silicon deposition. Preferably, the preparation of the silicon-carbon material includes the following steps: performing a silane deposition reaction on the porous carbon framework to obtain a precursor material, and micro-oxidizing the precursor material to obtain the silicon-carbon material.

In some embodiments, the average sphericity of the silicon-carbon material may be regulated by particle shaping treatment. The particle shaping treatment may use any one of a turbine pulverizer, an airflow vortex micronizer, a super cyclone mill, an air classifying pulverizer or a double-roller pulverizer. By using the above equipment and controlling the equipment rotation speed and processing time, particle shaping can be achieved to obtain the required average sphericity.

In some embodiments, a negative electrode active substance layer further includes a binder. The binder may include various binder polymers, such as polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In some embodiments, the negative electrode active substance layer further includes a conductive agent to improve the conductivity of the electrode. Any conductive material may be used as the conductive material provided that the conductive material does not cause a chemical change. Examples of the conductive agent include, but are not limited to: a carbon-based material such as carbon black, acetylene black, Ketjen black, carbon fiber, or the like; a metal-based material such as metal powder or metal fiber including copper, nickel, aluminum, or silver; a conductive polymer such as a polyphenylene derivative; or any mixture thereof.

In some embodiments, a negative electrode current collector includes, but is not limited to: copper foil, nickel foil, stainless steel foil, titanium foil, foamed nickel, foamed copper, a polymer substrate coated with conductive metal, and any combination thereof. In some embodiments, the negative electrode current collector is copper foil.

In some embodiments, the structure of the negative electrode is a negative electrode structure well known in the art that can be used in electrochemical apparatuses.

In some embodiments, the preparation method of the negative electrode is a preparation method of a negative electrode well known in the art that can be used in electrochemical apparatuses. For example, the negative electrode may be obtained by the following method: mixing an active material, a conductive agent, a binder, and the above negative electrode additive in a solvent, and heating a thickener as needed to prepare a negative electrode active material slurry, applying the negative electrode active material slurry onto a current collector, followed by drying and cold pressing, to form a negative electrode active substance layer. In some embodiments, the solvent may include, but is not limited to, water, or N-methylpyrrolidone.

Positive electrode

The positive electrode includes a positive electrode current collector and a positive electrode active substance layer provided on at least one surface of the positive electrode current collector. The specific type of the positive electrode active material is not particularly limited and may be selected according to requirements.

In some embodiments, the positive electrode active material includes a lithium-containing transition metal composite oxide. In some embodiments, the positive electrode active material is selected from at least one of the following: lithium cobalt oxide ($LiCoO_2$), lithium nickel cobalt manganese ternary material (NCM), lithium manganate ($LiMn_2O_4$), lithium nickel manganate ($LiNi_{0.5}Mn_{1.5}O_4$) or lithium iron phosphate ($LiFePO_4$).

In some embodiments, the positive electrode active substance layer further includes a binder and optionally further includes a conductive material. The binder can enhance bonding between particles of the positive electrode active material, and bonding between the positive electrode active material and a positive electrode current collector. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, or the like.

In some embodiments, the positive electrode active substance layer further includes a conductive material, thereby imparting conductive performance to the electrode. The conductive material may include any conductive material provided that the conductive material does not cause a chemical change. Non-limiting examples of the conductive material include carbon-based materials (for example, carbon black, acetylene black, Ketjen black, and carbon fibers), a metal-based material (for example, metal powder and metal fibers, including copper, nickel, aluminum, and silver), a conductive polymer (for example, a polyphenylene derivative), and a mixture thereof.

In some embodiments, the positive electrode current collector is a metal, and the metal includes, for example but is not limited to, an aluminum foil.

In some embodiments, the structure of the positive electrode is a positive electrode structure well known in the art that can be used in secondary batteries.

In some embodiments, the preparation method of the positive electrode is a preparation method of a positive electrode well known in the art that can be used in secondary batteries. For example, the positive electrode may be obtained by the following method: mixing an active material, a conductive material, a binder, and the above positive electrode additive in a solvent to prepare a positive electrode active material slurry, applying the positive electrode slurry onto a current collector, followed by drying and cold pressing, to form a positive electrode active substance layer. In some embodiments, the solvent may include water, N-methylpyrrolidone, or the like, but is not limited thereto.

Separator

In some embodiments, a separator is provided between the positive electrode and the negative electrode to prevent short circuit. The separator is not limited to a particular material or shape, and may be based on any technology disclosed in the prior art. In some embodiments, the separator includes a polymer, an inorganic substance, or the like formed by a material stable to the electrolyte of this application.

For example, in some embodiments, the separator includes a substrate layer. The substrate layer is a non-woven fabric, film, or composite film having a porous structure. The material of the substrate layer is selected from at least one of polyethylene, polypropylene, polyethylene glycol terephthalate, or polyimide. Specifically, the material of the substrate layer is selected from a polypropylene porous film, a polyethylene porous film, a polypropylene non-woven fabric, a polyethylene non-woven fabric, or a polypropylene-polyethylene-polypropylene porous composite film.

A surface treatment layer is provided on at least one surface of the substrate layer. The surface treatment layer may be a polymer layer or an inorganic substance layer, or a layer formed by a mixture of a polymer and an inorganic substance. Specifically, the inorganic substance layer includes inorganic particles and a binder. The inorganic particles are selected from a combination of one or more of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder may be selected from a combination of one or more of polyvinylidene fluoride, vinylidene fluoride-hexafluoropropylene copolymer, polyamide, polyacrylonitrile, polyacrylic ester, polyacrylic acid, polyacrylate, polyvinylpyrrolidone, polyvinyl ether, polymethyl methacrylate, polytetrafluoroethylene, or polyhexafluoropropylene.

According to the second aspect of this application, this application provides an electronic device, including the above secondary battery.

The secondary battery of this application is not particularly limited to any purpose, and may be used in any known electronic device in the prior art. For example, the electronic device includes, but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor. In addition, in addition to the secondary battery of this application is not only applicable to the electronic device listed above but also applicable to energy storage power stations, marine vehicles, and air vehicles. The air vehicles include airborne vehicles inside the atmosphere and airborne vehicles outside the atmosphere.

The technical solutions of some embodiments of this application is further illustrated by specific examples below.

Example 1-1

I. Preparation of lithium-ion battery:

1. Preparation of negative electrode plate

Artificial graphite and a silicon-carbon material were selected as the negative electrode active material, where the sphericity of the silicon-carbon material was 0.89. The preparation process of the silicon-carbon material was as follows:

A porous carbon framework was prepared: the pore volume of the porous carbon framework was 0.7 g/cc, where the pore volume of micropores and mesopores was 82%.

A silane deposition reaction was performed on the porous carbon framework. The conditions for the silane deposition reaction included, introducing a silane gas with a volume content of 24% at 700°C, the other gas component was nitrogen, and the reaction time was 10 h to obtain a precursor material. The precursor material was subjected to micro-oxidize at 100°C by introducing oxygen with a volume content of 20%, the other gas component is nitrogen, and the reaction time was 15 h to obtain a silicon-carbon material. Then, the silicon-carbon material was shaped using a turbine pulverizer to obtain a silicon-carbon material with an average sphericity of 0.89.

Artificial graphite, the above silicon-carbon material, conductive agent carbon black, binder styrene-butadiene rubber (SBR) and thickener sodium carboxymethyl cellulose (CMC) were mixed at a mass ratio of 90:5:1.8:1.5:1.7, added to the solvent deionized water and fully stirred and mixed to form a uniform negative electrode slurry. The negative electrode slurry was uniformly applied onto a negative electrode current collector copper foil, followed by drying and cold pressing, to form a negative electrode active substance layer. Then cutting and tab welding were performed to obtain a negative electrode plate.

2. Preparation of positive electrode plate

A positive electrode active material lithium cobalt oxide, a conductive agent acetylene black, and a binder polyvinylidene fluoride (PVDF) were mixed in a mass ratio of 96.3:2.2:1.5 in the solvent N-methylpyrrolidone (NMP) and fully stirred uniformly in a vacuum mixer to obtain a positive electrode slurry. The positive electrode slurry was applied onto a positive electrode current collector aluminum foil, followed by drying and cold pressing, to form a positive electrode active substance layer. Then cutting and tab welding were performed to obtain a positive electrode plate.

3. Preparation of electrolyte

In a dry argon atmosphere glove box, propyl propionate (PP), ethyl propionate (EP), ethylene carbonate (EC), propylene carbonate (PC), and diethyl carbonate were uniformly mixed and dissolved, the mixture was fully stirred, and then lithium salt $LiPF_6$ was added and evenly mixed to obtain an electrolyte. Based on a mass of the electrolyte, a mass percentage of the lithium salt $LiPF_6$ was 12%, a mass percentage of EP was 13%, a mass percentage of PP was 41%, a mass percentage of EC was 11%, a mass percentage of PC was 20%, and (a+b)/(c+d) was 0.57. In some embodiments, diethyl carbonate was not added to the electrolyte.

4. Preparation of separator

A polyethylene (PE) porous polymer film was used as the separator, with a porosity of 30%.

5. Preparation of lithium-ion battery

The obtained positive electrode plate, separator and negative electrode plate were stacked in sequence, so that the separator was sandwiched between the positive electrode plate and the negative electrode plate for separation. Then, the resulting stack was wound to obtain a bare cell. The bare cell was placed in an outer packaging foil aluminum plastic film, the electrolyte was injected, followed by processes such as vacuum packaging, standing, and formation to obtain a lithium-ion battery.

Examples 1-2 to 1-24

The preparation processes of Examples 1-2 to 1-24 differed from Example 1-1 as listed in Table 1, Examples 1-10 and 1-16 did not contain diethyl carbonate, and the average sphericity of the silicon-carbon material in Examples 1-17 to 1-24 was obtained by adjusting the rotation speed and processing time of the turbine pulverizer. The remaining preparation processes and conditions were the same as those of Example 1-1.

Comparative Examples 1-1 to 1-3

The preparation processes of Comparative Examples 1-1 to 1-3 differed from Example 1-1 as listed in Table 1, and Comparative Example 1-1 did not contain diethyl carbonate. The remaining preparation processes and conditions were the same as those of Example 1-1.

Examples 2-1 to 2-13

The preparation processes of Examples 2-1 to 2-13 differed from Example 1-3 as listed in Table 2, and the mass percentages of EC, PC, EP, PP, and 1,3,6-hexanetricarbonitrile in the electrolyte were adjusted to affect the low-temperature discharge retention rate and short-circuit test pass rate of the lithium-ion battery. The remaining preparation processes and conditions were the same as those of Example 1-3.

Examples 3-1 to 3-29

The preparation processes of Examples 3-1 to 3-29 differed from Example 1-3 as listed in Table 3, and the mass percentages of fluoroethylene carbonate, succinonitrile, ethylene glycol bis(propionitrile) ether, lithium difluorophosphate and lithium tetrafluoroborate in the electrolyte were adjusted. The remaining preparation processes and conditions were the same as those of Example 1-3.

Examples 3-30 to 3-33

The preparation processes of Examples 3-30 to 3-33 differed from Example 2-2 as listed in Table 4, and the mass percentages of fluoroethylene carbonate, succinonitrile, ethylene glycol bis(propionitrile) ether, lithium difluorophosphate and lithium tetrafluoroborate in the electrolyte were adjusted. The remaining preparation processes and conditions were the same as those of Example 2-2.

Examples 4-1 to 4-11

The preparation processes of Examples 4-1 to 4-11 differed from Example 1-3 as listed in Table 5, and the average sphericity of the silicon-carbon material and the mass percentage of the lithium difluorophosphate were adjusted. The remaining preparation processes and conditions are the same as those of Example 1-3.

The specific differences in Examples 1-2 to 1-24, Examples 2-1 to 2-13, Examples 3-1 to 3-33 and Examples 4-1 to 4-11 were shown in detail in Tables 1 to 5.

II. Test methods

Test for components of electrolyte:

The electrolyte was tested by gas chromatography-mass spectrometry (GC-MS) and ion chromatography (IC) to detect each component in the electrolyte and measure its content.

Test for sphericity: a Malvern automatic image particle size analyzer was used to capture and process images of, 3 g of dispersed silicon-carbon material particles. Then the microstructure and morphology of the particles were accurately analyzed by morphology-directed Raman spectroscopy (MDRS) to obtain the longest diameter and the shortest diameter of all particles. The ratio of the shortest diameter to the longest diameter of each particle was calculated to obtain the sphericity of each particle. The average of the sphericity of all particles is the average sphericity.

Low-temperature discharge performance

At 25°C, the lithium-ion battery was charged to 4.25 V at a constant current of 1.0C, and then charged at a constant voltage until the current dropped to 0.05C. The temperature was lowered to -10°C and left standing for 30 minutes, and then the lithium-ion battery was discharged to 3.0 V at a constant current of 1.0C, so as to obtain an initial discharge capacity at -10°C.

At 60°C, the lithium-ion battery was charged to 4.25 V at a constant current of 1.0C, and then charged at a constant voltage until the current dropped to 0.05C. The lithium-ion battery was stored for 2 days. The temperature was lowered to -10°C and left standing for 30 minutes, and then the lithium-ion battery was discharged to 3.0 V at a constant current of 1.0C, so as to obtain a discharge capacity at -10°C after high-temperature storage;

Low-temperature discharge retention rate = (discharge capacity at -10°C after high-temperature storage / initial discharge capacity at -10°C) × 100%.

Short-circuit test pass rate

The lithium-ion battery was charged to 4.2 V at a constant current of 1.0C, and then charged at a constant voltage until the current dropped to 0.05C, and charging was stopped; the lithium-ion battery was left standing for 1 hour, and then OCV was measured. At room temperature, the positive and negative electrodes of the lithium-ion battery were short-circuited using a copper wire with a resistance not exceeding 0.1 ohm. The lithium-ion battery was discharged until fire or explosion occurs or until the lithium-ion battery was completely discharged, and the test could be stopped when the surface temperature of the lithium-ion battery returned to close to the ambient temperature. 20 lithium-ion batteries were tested, and the number of lithium-ion batteries that meet the judgment criteria was counted as the short-circuit test pass rate of the lithium-ion batteries. Determination criteria: no leakage, no smoke, no fire, no explosion of the battery, and the surface temperature of the battery does not exceed 150°C.

**Table 1**

| No. | Average sphericity of silicon-carbon material | EC-a (%) | PC-b (%) | EP-c (%) | PP-d (%) | a+b | c+d | (a+b)/(c+d) | Low-temperature discharge retention rate (%) | Short-circuit test - number of lithium-ion batteries passing short-circuit test |
|---|---|---|---|---|---|---|---|---|---|---|
| Example 1-1 | 0.89 | 11 | 20 | 13 | 41 | 31 | 54 | 0.57 | 87.3 | 14 |
| Example 1-2 | 0.89 | 13 | 16 | 19 | 37 | 29 | 56 | 0.52 | 86.2 | 15 |
| Example 1-3 | 0.89 | 15 | 9 | 16 | 45 | 24 | 60 | 0.40 | 85.6 | 15 |
| Example 1-4 | 0.89 | 19 | 11 | 24 | 33 | 30 | 57 | 0.53 | 86.7 | 15 |
| Example 1-5 | 0.89 | 22 | 14 | 18 | 27 | 36 | 45 | 0.80 | 83.2 | 14 |
| Example 1-6 | 0.89 | 26 | 9 | 14 | 38 | 35 | 52 | 0.67 | 84.5 | 14 |
| Example 1-7 | 0.89 | 31 | 11 | 12 | 29 | 42 | 41 | 1.02 | 83.1 | 14 |
| Example 1-8 | 0.89 | 34 | 7 | 13 | 33 | 41 | 46 | 0.89 | 84.3 | 14 |
| Example 1-9 | 0.89 | 38 | 5 | 11 | 28 | 43 | 39 | 1.10 | 78.5 | 13 |
| Example 1-10 | 0.89 | 18 | 12 | 28 | 30 | 30 | 58 | 0.52 | 79.6 | 14 |
| Example 1-11 | 0.89 | 20 | 8 | 26 | 32 | 28 | 58 | 0.48 | 82.9 | 15 |
| Example 1-12 | 0.89 | 14 | 10 | 12 | 49 | 24 | 61 | 0.39 | 85.3 | 15 |
| Example 1-13 | 0.89 | 17 | 17 | 21 | 31 | 34 | 52 | 0.65 | 84.2 | 16 |
| Example 1-14 | 0.89 | 19 | 13 | 23 | 26 | 32 | 49 | 0.65 | 83.5 | 15 |
| Example 1-15 | 0.89 | 10 | 5 | 22 | 43 | 15 | 65 | 0.23 | 76.5 | 13 |
| Example 1-16 | 0.89 | 31 | 22 | 10 | 25 | 53 | 35 | 1.51 | 77.6 | 13 |
| Example 1-17 | 0.81 | 15 | 9 | 16 | 44 | 24 | 60 | 0.40 | 81.2 | 14 |
| Example 1-18 | 0.84 | 15 | 9 | 16 | 44 | 24 | 60 | 0.40 | 82.6 | 15 |
| Example 1-19 | 0.86 | 15 | 9 | 16 | 44 | 24 | 60 | 0.40 | 83.3 | 15 |
| Example 1-20 | 0.91 | 15 | 9 | 16 | 44 | 24 | 60 | 0.40 | 86.4 | 16 |
| Example 1-21 | 0.93 | 15 | 9 | 16 | 44 | 24 | 60 | 0.40 | 88.2 | 16 |
| Example 1-22 | 0.95 | 15 | 9 | 16 | 44 | 24 | 60 | 0.40 | 89.1 | 16 |
| Example 1-23 | 0.86 | 13 | 16 | 19 | 37 | 29 | 56 | 0.52 | 85.2 | 15 |
| Example 1-24 | 0.93 | 19 | 11 | 24 | 33 | 30 | 57 | 0.53 | 87.8 | 15 |
| Comparative Example 1-1 | 0.89 | 13 | 3 | 28 | 44 | 16 | 72 | 0.22 | 67.5 | 7 |
| Comparative Example 1-2 | 0.89 | 32 | 15 | 8 | 22 | 47 | 30 | 1.57 | 68.2 | 8 |
| Comparative Example 1-3 | 0.78 | 15 | 9 | 16 | 44 | 24 | 60 | 0.40 | 70.6 | 10 |

In Table 1, the mass percentages of EC, PC, EP, and PP in the electrolyte are adjusted and/or the average sphericity of the silicon-carbon material is adjusted to study their effects on the low-temperature discharge retention rate and short-circuit test pass rate of the lithium-ion battery. In Table 1, compared with Comparative Examples 1-1 to 1-3, in Examples 1-1 to 1-16, when propyl propionate (PP), ethyl propionate (EP), ethylene carbonate (EC), propylene carbonate (PC), or part of diethyl carbonate is uniformly mixed, the silicon-carbon material has high sphericity, (a+b)/(c+d) is in an appropriate range, and the assembled lithium-ion battery has good low-temperature discharge performance and short-circuit test pass rate. In particular, it can be learned from Examples 1-17 to 1-24 that when the silicon-carbon material has high sphericity, it also significantly improves the good low-temperature discharge performance and short-circuit test pass rate of the lithium-ion battery.

**Table 2**

| No. | EC-a (%) | PC-b (%) | EP-c (%) | PP-d (%) | a+b | e (%) | (a+b)/e | Low-temperature discharge retention rate (%) | Short-circuit test - number of lithium-ion batteries passing short-circuit test |
|---|---|---|---|---|---|---|---|---|---|
| Example 1-3 | 15 | 9 | 16 | 44 | 24 | / | / | 85.6 | 15 |
| Example 2-1 | 15 | 9 | 16 | 44 | 24 | 1.3 | 18.5 | 86.6 | 16 |
| Example 2-2 | 15 | 9 | 16 | 44 | 24 | 1.6 | 15.0 | 87.1 | 16 |
| Example 2-3 | 15 | 9 | 16 | 44 | 24 | 2.2 | 10.9 | 88.6 | 17 |
| Example 2-4 | 15 | 9 | 16 | 44 | 24 | 2.6 | 9.2 | 89.7 | 18 |
| Example 2-5 | 15 | 9 | 16 | 44 | 24 | 3.1 | 7.7 | 87.5 | 18 |
| Example 2-6 | 15 | 9 | 16 | 44 | 24 | 3.5 | 6.9 | 87.2 | 17 |
| Example 2-7 | 15 | 9 | 16 | 44 | 24 | 3.9 | 6.2 | 86.8 | 17 |
| Example 2-8 | 14 | 7 | 16 | 44 | 21 | 4.1 | 5.1 | 86.6 | 17 |
| Example 2-9 | 11 | 6 | 16 | 44 | 17 | 4.3 | 4.0 | 86.2 | 17 |
| Example 2-10 | 11 | 6 | 16 | 44 | 17 | 0.8 | 21.3 | 86.0 | 15 |
| Example 2-11 | 18 | 11 | 22 | 33 | 29 | 3.2 | 9.1 | 89.6 | 18 |
| Example 2-12 | 22 | 14 | 18 | 27 | 36 | 2.8 | 12.9 | 88.5 | 18 |
| Example 2-13 | 15 | 9 | 14 | 38 | 24 | 2.4 | 10.0 | 87.7 | 18 |

In Table 2, the mass percentages of EC, PC, EP, PP, and 1,3,6-hexanetricarbonitrile in the electrolyte are adjusted to study their effects on the low-temperature discharge retention rate and short-circuit test pass rate of the lithium-ion battery. In the above Examples 2-2 to 2-13, when the silicon-carbon material has high sphericity, the electrolyte contains an appropriate content of 1,3,6-hexanetricarbonitrile, and ethylene carbonate, propylene carbonate, and 1,3,6-hexanetricarbonitrile satisfy a specific relationship range, resulting in good low-temperature discharge performance and short-circuit test pass rate for the lithium-ion battery.

**Table 3**

| No. | Lithium difluorophosphate - n (%) | Fluoroethylene carbonate - g (%) | Succinonitrile (%) | Ethylene glycol bis(propionitrile) ether (%) | Lithium tetrafluoroborate (%) | Low-temperature discharge retention rate (%) | Short-circuit test - number of lithium-ion batteries passing short-circuit test |
|---|---|---|---|---|---|---|---|
| Example 1-3 | / | / | / | / | / | 85.6 | 15 |
| Example 3-1 | 0.12 | / | / | / | / | 86.0 | 16 |
| Example 3-2 | 0.18 | / | / | / | / | 86.2 | 16 |
| Example 3-3 | 0.24 | / | / | / | / | 86.3 | 16 |
| Example 3-4 | / | / | / | 0.4 | / | 85.8 | 15 |
| Example 3-5 | / | / | / | 1.2 | / | 86.1 | 16 |
| Example 3-6 | / | / | / | 2.5 | / | 86.3 | 16 |
| Example 3-7 | / | / | / | / | 0.008 | 85.7 | 15 |
| Example 3-8 | / | / | / | / | 0.015 | 86.1 | 16 |
| Example 3-9 | / | / | / | / | 0.050 | 86.3 | 16 |
| Example 3-10 | 0.01 | 3.7 | / | 0.2 | / | 86.8 | 17 |
| Example 3-11 | 0.30 | / | / | / | 0.001 | 86.5 | 17 |
| Example 3-12 | / | / | 3.1 | 0.9 | / | 87.5 | 18 |
| Example 3-13 | / | 2.1 | / | / | 0.008 | 86.9 | 17 |
| Example 3-14 | 0.04 | 3.9 | / | / | / | 86.4 | 17 |
| Example 3-15 | 0.10 | / | 3.9 | / | / | 86.7 | 17 |
| Example 3-16 | 0.07 | / | / | 2.1 | 0.015 | 87.6 | 18 |
| Example 3-17 | 0.15 | / | 3.2 | / | 0.026 | 88.7 | 18 |
| Example 3-18 | 0.18 | 2.7 | / | 1.1 | / | 88.4 | 18 |
| Example 3-19 | 0.22 | / | 2.7 | / | / | 87.1 | 17 |
| Example 3-20 | / | 2.1 | / | / | 0.050 | 87.3 | 17 |
| Example 3-21 | 0.12 | / | 1.3 | 1.7 | / | 88.9 | 19 |
| Example 3-22 | / | 0.5 | / | / | 0.100 | 86.6 | 17 |
| Example 3-23 | 0.24 | 1.8 | / | / | 0.015 | 88.3 | 18 |

(continued)

| No. | Lithium difluorophosphate - n (%) | Fluoroethylene carbonate - g (%) | Succinonitrile (%) | Ethylene glycol bis(propionitrile) ether (%) | Lithium tetrafluoroborate (%) | Low-temperature discharge retention rate (%) | Short-circuit test - number of lithium-ion batteries passing short-circuit test |
|---|---|---|---|---|---|---|---|
| Example 3-24 | / | / | 0.6 | 1.6 | 0.040 | 87.7 | 18 |
| Example 3-25 | / | 3.2 | / | / | 0.070 | 87.0 | 17 |
| Example 3-26 | 0.08 | 2.2 | 1.7 | / | / | 88.8 | 19 |
| Example 3-27 | / | 1.1 | / | 0.4 | / | 87.4 | 17 |
| Example 3-28 | 0.10 | 1.8 | / | 0.9 | 0.026 | 89.4 | 19 |
| Example 3-29 | 0.12 | 2.1 | 1.3 | 0.4 | 0.015 | 90.2 | 20 |

**Table 4**

| No. | Lithium difluorophosphate - n (%) | Fluoroethylene carbonate - g (%) | Succinonitrile (%) | Ethylene glycol bis(propionitrile) ether (%) | Lithium tetrafluoroborate (%) | Low-temperature discharge retention rate (%) | Short-circuit test - number of lithium-ion batteries passing short-circuit test |
|---|---|---|---|---|---|---|---|
| Example 2-2 | / | / | / | / | / | 87.1 | 16 |
| Example 3-30 | 0.15 | 1.6 | / | 0.6 | / | 90.8 | 20 |
| Example 3-31 | 0.12 | / | 1.7 | / | 0.026 | 89.9 | 20 |
| Example 3-32 | / | / | / | 1.5 | 0.050 | 88.9 | 19 |
| Example 3-33 | 0.12 | 2.2 | / | / | 0.040 | 89.5 | 19 |

In Table 3 and Table 4, the mass percentages of fluoroethylene carbonate, succinonitrile, ethylene glycol bis(propionitrile) ether, lithium difluorophosphate, and lithium tetrafluoroborate in the electrolyte are adjusted to study their effects on the low-temperature discharge retention rate and short-circuit test pass rate of the battery. In the Examples 3-1 to 3-29, when the silicon-carbon material has high sphericity, and when the electrolyte contains at least one of fluoroethylene carbonate, succinonitrile, ethylene glycol bis(propionitrile) ether, lithium difluorophosphate, and lithium tetrafluoroborate, and the electrolyte contains appropriate amounts of the above components, the lithium-ion battery can be further improved to have good low-temperature discharge performance and short-circuit test pass rate.

**Table 5**

| No. | Average sphericity of silicon-carbon material (m) | Lithium difluorophosphate - n (%) | m/n | Low-temperature discharge performance - capacity ratio (%) | Short-circuit test - number of lithium-ion batteries passing short-circuit test |
|---|---|---|---|---|---|
| Example 1-3 | 0.89 | / | / | 85.6 | 15 |
| Example 4-1 | 0.87 | 0.06 | 14.5 | 86.7 | 16 |
| Example 4-2 | 0.89 | 0.07 | 12.7 | 87.1 | 17 |
| Example 4-3 | 0.89 | 0.14 | 6.4 | 87.9 | 18 |
| Example 4-4 | 0.89 | 0.23 | 3.9 | 87.4 | 16 |
| Example 4-5 | 0.89 | 0.30 | 3.0 | 86.5 | 16 |
| Example 4-6 | 0.87 | 0.12 | 7.3 | 88.3 | 18 |
| Example 4-7 | 0.91 | 0.12 | 7.6 | 88.5 | 19 |
| Example 4-8 | 0.93 | 0.12 | 7.8 | 88.7 | 19 |
| Example 4-9 | 0.95 | 0.12 | 7.9 | 90.2 | 19 |
| Example 4-10 | 0.91 | 0.15 | 6.1 | 88.6 | 18 |
| Example 4-11 | 0.93 | 0.08 | 11.6 | 88.4 | 18 |

In Table 5, the average sphericity of the silicon-carbon material and the mass percentage of the lithium difluorophosphate in the electrolyte are adjusted to study their effects on the low-temperature discharge retention rate and short-circuit test pass rate of the lithium-ion battery. In Examples 4-1 to 4-11, when the average sphericity of the silicon-carbon material is within the above appropriate range and satisfies a specific relationship ratio with the mass percentage of the lithium difluorophosphate, the lithium-ion battery can be further improved to have good low-temperature discharge performance and short-circuit test pass rate.

The foregoing embodiments are merely intended to describe the technical solutions of this application and are not intended to constitute any limitation. Although this application is described in detail with reference to the foregoing preferred embodiments, persons of ordinary skill in the art should understand that modifications or equivalent replacements can be made to the technical solutions of this application without departing from the scope of the technical solutions of this application.

## Claims

1. A secondary battery, comprising a negative electrode plate and an electrolyte; the negative electrode plate comprising a negative electrode active material layer; wherein the negative electrode active material layer comprises graphite and a silicon-carbon material, and an average sphericity m of the silicon-carbon material is 0.81 to 0.95; and
the electrolyte comprises ethylene carbonate, propylene carbonate, ethyl propionate, and propyl propionate; wherein based on a mass of the electrolyte, a mass percentage of the ethylene carbonate is a%, a mass percentage of the propylene carbonate is b%, a mass percentage of the ethyl propionate is c%, a mass percentage of the propyl propionate is d%, and (a+b)/(c+d) is in a range of 0.23 to 1.51.

2. The secondary battery according to claim 1, wherein the electrolyte further comprises 1,3,6-hexanetricarbonitrile; based on the mass of the electrolyte, a mass percentage of the 1,3,6-hexanetricarbonitrile is e%, and (a+b)/e is in a range of 4 to 18.5.

**3.** The secondary battery according to claim 1 or 2, wherein the electrolyte further comprises at least one of fluoroethylene carbonate, succinonitrile, ethylene glycol bis(propionitrile) ether, lithium difluorophosphate, or lithium tetrafluoroborate.

**4.** The secondary battery according to claim 3, wherein the electrolyte satisfies at least one of the following conditions:

(1) the electrolyte comprises the fluoroethylene carbonate, a mass percentage of the fluoroethylene carbonate in the electrolyte is 0.5% to 3.9%;
(2) the electrolyte comprises the succinonitrile, a mass percentage of the succinonitrile in the electrolyte is 0.6% to 3.9%;
(3) the electrolyte comprises the ethylene glycol bis(propionitrile) ether, a mass percentage of the ethylene glycol bis(propionitrile) ether in the electrolyte is 0.2% to 2.5%;
(4) the electrolyte comprises the lithium difluorophosphate, a mass percentage of the lithium difluorophosphate in the electrolyte is 0.01% to 0.30%; or
(5) the electrolyte comprises the lithium tetrafluoroborate, a mass percentage of the lithium tetrafluoroborate in the electrolyte is 0.001% to 0.100%.

**5.** The secondary battery according to any one of claims 1 to 4, wherein the electrolyte further comprises lithium difluorophosphate; based on the mass of the electrolyte, a mass percentage of the lithium difluorophosphate is n%, and m/n is in a range of 3 to 14.5.

**6.** The secondary battery according to any one of claims 1 to 5, wherein the electrolyte satisfies at least one of the following conditions:

(1) a is in a range of 10 to 38;
(2) b is in a range of 5 to 26;
(3) c is in a range of 12 to 26; or
(4) d is in a range of 27 to 49.

**7.** The secondary battery according to any one of claims 2 to 6, wherein e is in a range of 0.8 to 4.3.

**8.** The secondary battery according to any one of claims 2 to 7, wherein (a+b)/e is in a range of 5.1 to 15.

**9.** The secondary battery according to claim 7 or 8, wherein e is in a range of 1.3 to 3.5.

**10.** The secondary battery according to any one of claims 4 to 9, wherein the electrolyte satisfies at least one of the following conditions:

(1) the mass percentage of the fluoroethylene carbonate in the electrolyte is 1.1% to 3.2%;
(2) the mass percentage of the succinonitrile in the electrolyte is 1.3% to 3.2%;
(3) the mass percentage of the lithium difluorophosphate in the electrolyte is 0.04% to 0.24%;
(4) the mass percentage of the ethylene glycol bis(propionitrile) ether in the electrolyte is 0.4% to 2.1%; or
(5) the mass percentage of the lithium tetrafluoroborate in the electrolyte is 0.008% to 0.050%.

**11.** The secondary battery according to any one of claims 5 to 10, wherein m/n is in a range of 3.9 to 12.7.

**12.** The secondary battery according to any one of claims 1 to 11, wherein the electrolyte satisfies at least one of the following conditions:

(1) a is in a range of 11 to 26;
(2) b is in a range of 7 to 20;
(3) c is in a range of 13 to 21; or
(4) d is in a range of 30 to 44.

**13.** The secondary battery according to any one of claims 1 to 12, wherein the average sphericity m of the silicon-carbon material is 0.86 to 0.95.

**14.** An electronic device, wherein the electronic device comprises the secondary battery according to any one of claims 1

to 13.